# DEMANDE DE BREVET EUROPEEN

(11) **EP 3 816 839 A1**
(43) Date de publication de la demande: **05.05.2021**
(21) Numéro de dépôt: 19206481.4
(22) Date de dépôt: 31.10.2019
(51) Int. Cl.: G06F 21/64, H04L 9/32, H04L 29/06

(54) **PROCÉDÉ MIS EN OEUVRE PAR ORDINATEUR D'ÉTABLISSEMENT SÉCURISÉ D'UN DOCUMENT DE TRANSFERT DE RESPONSABILITÉ D'UN BIEN**

(71) Demandeur: Proov Group, 92200 Neuilly-sur-Seine (FR)
(72) Inventeur: TISSANDIER, Gabriel, Pierre, Maxime, 92200 NEUILLY-SUR-SEINE (FR); MANCERON, Jean-Luc, Cédric, 92200 NEUILLY-SUR-SEINE (FR); PERRET-MEYER, Alexandre, 92200 NEUILLY-SUR-SEINE (FR)
(74) Mandataire: Fédit-Loriot

(57) **Abrégé**

Procédé (1) mis en œuvre par ordinateur d'établissement d'un document de transfert de responsabilité d'un bien caractérisé en ce qu'il comprend :
- L'acquisition (11) d'une pluralité de données saisies par un utilisateur ;
- La création d'un journal (12) de saisie ;
- Une étape de calcul d'une clé de sécurité finale (13) ;
- Une étape de stockage (14) ; et
- Une étape d'édition (15) numérique d'un document de transfert de responsabilité en fonction desdites données acquises.

## Description

L'invention concerne un procédé mis en œuvre par ordinateur pour l'établissement sécurisé d'un document de transfert de responsabilité d'un bien.

En particulier, l'invention se rapporte à l'établissement sécurisé d'une fiche d'état d'un bien de location lors de la prise et/ou de la remise du bien, notamment pour la location d'un véhicule automobile.

L'invention n'est toutefois pas seulement limitée au domaine de la location, elle s'applique aussi aux domaines connexes des assurances - constat avant souscription de la police et déclaration de sinistre-, dans le cadre de la gestion de flotte automobiles par les entreprises/administrations, en sortie d'usines par les constructeurs pour repérer les malfaçons et/ou défauts sur les véhicules neufs.

Le procédé selon l'invention peut en outre être utilisé dans des domaines généraux différents tels que la location immobilière.

Dans le domaine de la location de véhicules automobiles, et plus généralement dans le domaine de la location de biens, l'établissement d'une fiche d'état, aussi appelé rapport, état des lieux ou encore constat, est nécessaire tant lors de la prise du bien que lors de sa remise, afin d'attester de l'état du bien lors du transfert de responsabilités.

Ces états des lieux sont habituellement effectués par un constat contradictoire du locataire et du propriétaire, constatant sur un document physique, généralement une fiche papier, l'état d'usure et les dégâts présents sur le bien à louer ou sur le bien remis ; le document étant ensuite signé par les deux parties.

L'introduction des technologies numériques a permis l'apparition des constats numériques, pour lesquels le document papier est remplacé par un formulaire électronique, rempli par l'une des deux parties lors de l'état des lieux contradictoire.

Toutefois les solutions connues d'état des lieux numériques n'assurent pas une sécurité suffisante sur le document obtenu.

En effet, les informations stockées sont généralement falsifiables par la suite, de manière relativement indétectable, ce qui crée un risque juridique dans l'établissement de tels constats.

C'est pourquoi il existe le besoin d'un procédé sécurisé et fiable pour l'établissement d'un document de transfert de responsabilité d'un bien, tel qu'un bien de location, notamment un véhicule automobile.

A cet effet on propose un procédé mis en œuvre par ordinateur d'établissement d'un document de transfert de responsabilité d'un bien comprenant :
- L'acquisition d'une pluralité de données saisies par un utilisateur, chaque donnée acquise correspondant à une information dudit document ; lesdites données étant saisies les unes après les autres par ledit utilisateur ;
- La création d'un journal de saisie formant chaînage chronologique de la saisie des données par ledit utilisateur ;
- Une étape de calcul d'une clé de sécurité finale fonction desdites données saisies par ledit utilisateur ;
- Une étape de stockage desdites données acquises, dudit journal de saisie et de ladite clé de sécurité ; et
- Une étape d'édition numérique d'un document de transfert de responsabilité en fonction desdites données acquises.

Ainsi, on peut éditer un document de transfert de responsabilité, aussi appelé rapport, de manière sécurisée, en associant ce document à des données de sécurité aptes à en authentifier le contenu.

Avantageusement et de manière non limitative, le procédé comprend après l'étape de saisie, une étape de constitution d'un premier journal de clé de sécurité, de sorte que pour chaque entrée du journal de saisie, le premier journal de clé de sécurité comprend une clé calculée en fonction de ladite entrée. Ainsi, on peut obtenir un journal de données et un journal de clés de sécurité associées, de sorte que chaque clé de sécurité permet la vérification de l'authenticité de chaque donnée associée du journal de donnée.

Avantageusement et de manière non limitative, le procédé comprend en outre une étape de calcul de clé de sécurité incrémental dans lequel on calcule une première clé lors de l'acquisition d'une première donnée saisie par ledit utilisateur, et pour chaque acquisition d'une donnée suivante saisie par l'utilisateur, on calcule une clé de sécurité suivante en fonction de ladite donnée saisie et de la clé de sécurité précédente. Ainsi, on peut obtenir une clé de sécurité finale de manière incrémentale, autrement dit obtenue en prenant en compte l'ensemble des données acquises.

Avantageusement et de manière non limitative, lesdites clés de sécurité calculées lors de l'étape de calcul de clé de sécurité incrémental sont stockées de manière chaînées, de sorte à former un journal de clés de sécurité incrémental. Ainsi, on peut tracer l'ensemble des clés calculées de façon incrémentale ce qui améliore la capacité à détecter une divergence potentielle entre les données stockées et un rapport préalablement établi.

Avantageusement et de manière non limitative, au moins ladite clé de sécurité finale est stockée de manière décentralisée en particulier sur une Blockchain. Ainsi, on peut améliorer la sécurité du stockage de la clé de sécurité.

Avantageusement et de manière non limitative, l'étape d'acquisition comprend l'acquisition d'au moins un contenu multimédia, tel qu'une image numérique ou une vidéo numérique, associés chacun à une empreinte distincte calculée par un calcul d'empreinte distinct des autres données acquises et/ou stockée dans un journal d'empreintes de contenu multimédia distinct des autres données acquises. Ainsi, on peut authentifier et sécuriser l'acquisition de contenu multimédia de manière relativement simple et rapide lors de la création d'un rapport sécurisé.

L'invention concerne aussi un procédé mis en œuvre par ordinateur de vérification de l'authenticité d'un document établi par ledit procédé décrit précédemment, comprenant :
L'acquisition d'un ensemble de données stockées, d'une clé de sécurité associée et d'un journal de saisie associée ;
Le calcul d'une seconde clé de sécurité en fonction dudit journal de saisie associé et desdites données stockées ;

La comparaison entre la clé de sécurité associée et la seconde clé de sécurité, si les deux clés sont identiques ledit document étant authentique.

Ainsi on peut déterminer de manière certaine la validité d'un rapport créé avec le procédé d'établissement décrit précédemment.

En ce sens l'invention résout le problème obtenu par la combinaison avantageuse des deux procédés revendiqués, d'un part par la création d'un rapport associé à des données d'authentification et une clé de sécurité et d'autre part la vérification de ce rapport avec les données stockées.

L'invention concerne aussi un dispositif de traitement de données, tel qu'un serveur, un ordinateur personnel, un téléphone, une tablette, ou tout autre dispositif, comprenant des moyens pour mettre en œuvre les étapes du procédé d'établissement tel que décrit précédemment et/ou les étapes du procédé de vérification décrit précédemment.

L'invention concerne aussi un programme d'ordinateur comprenant des instructions qui, lorsque le programme est exécuté par un ordinateur, conduisent celui-ci à mettre en œuvre les étapes du procédé d'établissement décrit précédemment et/ou les étapes du procédé de vérification tel que décrit précédemment.

L'invention concerne aussi un support de données lisible par ordinateur, tel qu'un disque dur, un CD-Rom, un DVD-Rom, une mémoire flash, une mémoire morte, et tout autre support connu de l'homme du métier, sur lequel est enregistré l'un ou les programmes d'ordinateur décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est un organigramme d'un procédé pour l'établissement d'un document de transfert de responsabilité selon un mode de réalisation de l'invention ;
[Fig. 2] est un organigramme de détail d'une étape de création de clé de sécurité selon le mode de réalisation de la figure 1 ; et
[Fig. 3] est un organigramme d'un procédé de vérification selon un mode de réalisation de l'invention.

Selon un premier mode de réalisation de l'invention, un dispositif tel qu'un ordinateur, un serveur fournissant une interface de saisie, ou tout autre appareil informatique mobile tel qu'un smartphone ou une tablette numérique, met en œuvre un procédé pour l'établissement sécurisé d'un document de transfert de responsabilité d'un bien.

On entend dans le cadre de cette invention d'un document de transfert de responsabilité d'un bien, tout document de d'état des lieux, d'état d'un bien mobilier ou immobilier, ou tout autre constat, contradictoire ou non, pour établir à date certaine l'état d'un bien.

Un tel document, aussi appelé indifféremment dans la suite de la description rapport, état-des-lieux ou constat, comprend ainsi une succession de données textuelles et visuelles, telles que des images et des vidéos. Tout autre type de données numériques peuvent être inclus tel que des documents numériques, des sons numérisés, en fonction du domaine ou du bien auquel le constat est appliqué.

L'invention peut donc s'appliquer à tout bien, mobilier ou immobilier, et à toute activité associée telle que la location immobilière, la location automobile ou de tout autre bien, le convoyage, la mise-à-disposition, le gardiennage, la logistique, les assurances, etc.

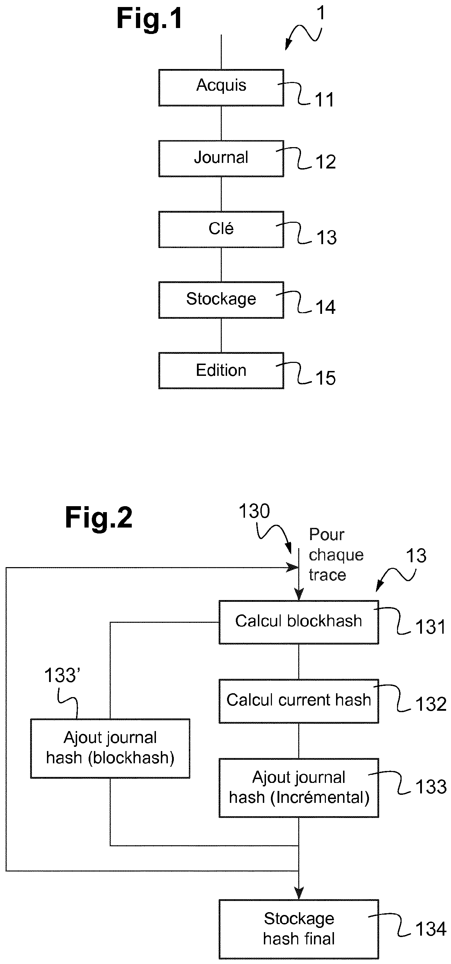

Le procédé 1, en référence aux figures 1 et 2, comprend une succession d'étapes associées à une interface utilisateur.

Le procédé mis en œuvre par ordinateur est aussi appelé dans la suite de la description application ou programme informatique.

Ainsi, pour créer un nouveau constat, le procédé requiert dans une première étape une connexion sécurisée de l'utilisateur.

Dans ce mode de réalisation, la connexion s'effectue par une authentification combinant un identifiant individuel, telle qu'une adresse email, un numéro de téléphone, une immatriculation et un mot de passe ou un code à usage unique composé de plusieurs caractères alphanumériques, communiqué par message.

Pour ceux des utilisateurs possédant un compte individuel, le compte est stocké dans une base de données et est associé en outre à un numéro unique d'identification. Certains utilisateurs sont rattachés à un compte de personne morale (entreprise, administration...) et ne possèdent donc pas de compte individuel.

Lorsqu'un utilisateur se connecte pour réaliser un constat, il s'authentifie, choisit le formulaire correspondant au cœur de métier recherché (tel que la location, l'assurance, le convoyage de biens, etc.) ou alloué à la personne morale à laquelle il est rattaché, et/ou au type de bien à inspecter (automobile, bateau, appartement, etc.).

En fonction de ces données, le procédé propose à l'utilisateur un formulaire de saisie des informations.

Ce formulaire, aussi appelé modèles ou *template,* est un document comprenant des champs prédéfinis à remplir par l'utilisateur.

Bien que la nature des données collectées diffère en fonction du type d'inspection et des besoins clients, les formulaires sont généralement divisés en sections contenant des champs à remplir, se rapportant respectivement :
- Aux personnes concernées/signataires. Il s'agit de renseigner ici les champs tels que les nom et prénom, société de rattachement, fonction, numéro de téléphone, email, etc.
- Au bien objet de l'inspection. Il s'agit là de fournir les références du bien : marque/modèle, immatriculation, numéro unique d'identification (VIN), type et adresse pour les biens immobiliers ;
- Aux photos guidées (aussi appelées *photo-scan*) du bien destinées à apporter une preuve visuelle de l'état du bien ;
- Aux photos libres destinées à apporter un complément visuel d'information dans la mesure où l'utilisateur l'estime nécessaire, sur l'état du bien ;
- A la signature du rapport par la/les personne(s) initiatrice(s) et/ou concernée(s).

Aussi lorsque l'utilisateur complète le formulaire, il saisit des données acquises par le procédé, chaque donnée étant associée à un champ prédéfini du formulaire.

L'objectif de l'invention est de permettre d'attester que les informations contenues dans le constat final correspondent effectivement aux données saisies par l'initiateur du rapport, et aux photos du bien prises à l'aide du procédé mis en œuvre par ordinateur, et qu'elles n'ont pas été modifiées par une personne non autorisée ni pendant ni après la réalisation de l'état des lieux.

Il s'agit donc en d'autres termes, de garantir l'intégrité des données du rapport tant pendant la réalisation de l'état des lieux et qu'après la génération du rapport.

Plusieurs moyens de sécurité ont été mis en place, dont la combinaison résulte en un procédé de sécurisation de données/informations dans le sens de la préservation de leur intégrité.

A cet effet plusieurs éléments de sécurité ont été mis en œuvre.

Lorsqu'un utilisateur se connecte à l'Application pour créer un rapport, il accomplit un certain nombre d'actions tel que choisir un modèle de formulaire, en remplir les champs, prendre des photos, signer le rapport.

Chacune de ses actions est acquise 11 par le procédé 1 sous forme de données d'acquisition, enregistrées par le procédé.

Aussi le procédé 1 comprend une étape d'acquisition 11 d'une pluralité de données saisies par un utilisateur, chaque donnée acquise correspondant à une information dudit document.

Ces données étant saisies les unes après les autres par l'utilisateur, l'ensemble des acquisitions successives est appelé Journal de saisie.

Le procédé 1 met à cet effet en œuvre une étape de création 12 d'un journal de saisie formant chaînage chronologique de la saisie des données par ledit utilisateur.

Le journal retrace ainsi de manière chronologique, toutes les actions ayant abouti à la génération du rapport final et permet de retracer l'historique du rapport.

Le journal, et les autres journaux selon l'invention, peut être stocké sous forme de fichier, dans une base de données ou sous tout autre format numérique adapté.

L'étape de création 12 du journal peut être effectuée en parallèle de l'étape d'acquisition 11, en ce sens que chaque fois qu'une donnée est saisie par l'utilisateur et acquise 11 par le procédé, elle est ajoutée 12 au journal en temps réel.

En particulier, dans ce mode de réalisation de l'invention, après chaque ajout d'une donnée au journal lors de l'étape de création 12 du journal, le journal est chiffré et enregistré localement sur le dispositif mettant en œuvre le procédé.

Le chiffrement du journal peut être réalisé par tout procédé de chiffrement connu adapté pour protéger un journal de données et pour être sauvegardé dans un fichier stocké localement, par exemple sur un organe de stockage de mémoire du dispositif, tel qu'un disque dur ou une mémoire flash.

Tout algorithme de chiffrement peuvent être mis en œuvre, tel que Advanced Encryption Standard (AES), Data Encryption Standard (DES) ou encore l'algorithme de Rivest-Shamir-Adleman (RSA), dès lors que le procédé est adapté pour chiffrer le journal régulièrement avant de le stocker localement.

Le stockage du fichier de journal chiffré est effectué de manière temporaire en local sur le dispositif mettant en œuvre le procédé, tel qu'un dispositif mobile, smartphone ou tablette, de sorte à pouvoir fonctionner même en l'absence de réseau de communication distant tel qu'un réseau Wifi ou GSM.

Toutefois, le stockage local est seulement temporaire, jusqu'au retour d'un réseau de communication permettant la transmission du fichier de journal chiffré jusqu'à un serveur distant sécurisé.

Le stockage permanent des fichiers de journaux est réalisé sur un serveur distant et les fichiers locaux sont supprimés après transfert au serveur distant.

Ainsi, le journal est créé, chiffré et stocké, en temps réel à chaque saisie, ce qui permet d'assurer une sécurité élevée et un suivi optimal des actes de l'utilisateur, même en cas de fermeture intempestive du logiciel, tout en garantissant que le fichier de journal ne soit pas modifié de manière frauduleuse.

En plus des données saisies par l'utilisateur de manière active, telles que les actions de connexion, remplissage des champs, prise de photos, import de contacts, acceptation de conditions contractuelles, d'autres événements peuvent être acquis dans le journal. On parle alors d'événements automatiquement captés par le système, de manière régulière ou ponctuelle, telles que l'identification de l'utilisateur ou l'identification et la localisation géographique du dispositif de création du constat.

Tous ces éléments constitutifs du constat final, saisies et acquisitions automatiques, forment des éléments appelés traces de constitution du rapport, et plus simplement traces.

Chaque trace est ainsi un élément ajouté au journal, l'ensemble des traces formant le journal final de création du rapport.

Ainsi, en rejouant l'ensemble du journal final de la première trace à la dernière trace, on peut obtenir de nouveau le rapport tel que créé.

Toutefois l'un des objectifs de l'invention est justement de pouvoir attester que le journal n'a pas été modifié a posteriori, qu'il s'agisse d'une modification volontaire, par exemple malveillante, ou d'une donnée corrompue.

Ainsi à titre d'exemple pour un constat automobile, le procédé peut journaliser les traces suivantes :
Une date et heure de réalisation de la trace ;
L'identification de l'utilisateur à l'origine de l'événement tracé ;
L'identification du type d'événement ;
La localisation géographique de l'événement (localisation géographique de l'appareil utilisé pour réaliser l'état des lieux) ;
Un identifiant unique de preuve.

Dans le cas d'un état des lieux de véhicule par exemple, les champs ci-après peuvent être répertoriés en tant que traces.
- Identification du système d'exploitation intégré dans le dispositif informatique utilisé pour réaliser le constat (IOS, Android, etc.)
- Nom et prénom de l'utilisateur
- numéro de référence servant à identifier l'Utilisateur ;
- identifiant public, tel que l'adresse électronique ;
- localisation géographique de l'appareil utilisé pour la réalisation de l'état des lieux ;
- paramètres géographiques relevés par le système correspondant à l'altitude
- paramètres géographiques relevés par le système correspondant à la latitude ;
- paramètres géographiques relevés par le système correspondant à la longitude ;
- horodatage des saisies ou horodatage régulier
- Position dans le formulaire en cours d'édition
- Section du modèle de formulaire, si le modèle de formulaire est divisé en sous-parties distinctes
- numéro d'immatriculation du véhicule ;
- ancienne valeur dans le cadre du remplacement ou de la correction d'une saisie précédente erronée ;
- photo de la face avant du véhicule ;
- photo du côté latéral gauche avant du véhicule ;
- photo du côté latéral droit avant du véhicule ;
- photo du côté latéral gauche arrière du véhicule ;
- photo du côté latéral droit arrière du véhicule ;
- photo de la face arrière du véhicule ;
- photos librement prises par l'utilisateur ;

En outre parmi les événements automatiquement acquis, les traces suivantes peuvent sont journalisées :
- initialisation d'un rapport à partir d'un modèle ;
- réouverture d'un rapport en attente ;
- récupération d'un rapport et/ou d'un journal après un crash (bug ou autre incident ayant interrompu l'état des lieux en cours) ;
- démarrage d'un import de profil ;
- fin d'un import de profil ;
- démarrage d'un import de rapport à partir du répertoire ;
- fin de l'import du rapport à partir du répertoire ;
- finalisation d'une étape et sollicitation par l'utilisateur du passage à l'étape suivante de constitution du rapport ;
- l'utilisateur met un terme prématuré à l'établissement du rapport avec sauvegarde d'état du rapport, par exemple en cliquant sur « quitter et sauvegarder » dans une interface utilisateur ;
- L'utilisateur accepte des conditions contractuelles, par exemple en cochant une case adéquate.

De manière plus générale, le procédé journalise aussi le chargement de toutes données obtenues de manière dynamique, qu'il s'agisse de données internes chargées après le lancement du procédé ou de données externes acquise par exemple via un mécanisme d'interface de programmation (plus connu sous l'acronyme anglophone d'API).

De telles données chargées dynamiquement peuvent par exemple comprendre des données relatives à un parc comprenant l'ensemble des biens, dans cet exemple de réalisation des véhicules, enregistrés dans la base de données et étant associés à l'utilisateur, soit parce qu'il a eu à effectuer des constats portant sur ces biens, soit parce qu'il les ajoutés à travers une fonctionnalité dédiée du logiciel associé au procédé selon l'invention.

L'import de parc renvoi donc dans ce cas à la sélection automatique d'un bien déjà enregistré.

Par un tel import, lorsque l'utilisateur sélectionne le bien, toutes les informations y afférentes s'affichent automatiquement et remplissent les champs du formulaire prévus à cet effet (ex: marque, VIN, immatriculation...). Cette action de remplissage automatique étant journalisée elle aussi par le procédé.

Afin de constituer une preuve cryptographique de l'authenticité du rapport, le procédé met ensuite en œuvre une étape de calcul (13) d'une clé de sécurité finale fonction des données saisies par l'utilisateur et des données acquises automatiquement par le procédé.

Pour chaque trace enregistrée dans le journal, une empreinte unique est calculée 131 à partir d'une fonction de hachage, de l'anglais *to hash* ; autrement dit, on procède au calcul d'une empreinte de cette donnée.

Une fonction de hachage est une fonction calculant une empreinte, encore appelée signature, condensat, ou haché, unique à partir de la ou des données fournies.

La fonction de hachage, parfois appelée fonction de condensation, permet d'obtenir un condensé d'un texte, c'est-à-dire une suite de caractères assez courte représentant le texte qu'il condense.

La fonction de hachage est telle qu'elle associe une et une seule empreinte à un texte en clair. Par conséquent, la moindre modification du document entraîne la modification de son empreinte.

D'autre part, il s'agit d'une fonction à sens unique, afin qu'il soit impossible de retrouver le message original à partir du condensé. S'il existe un moyen de retrouver le message en clair à partir du condensat, la fonction de hachage est dite « à brèche secrète ».

La longueur de l'empreinte doit être toujours la même, quelle que soit la longueur des données en entrée, bien que l'invention pourrait être adaptée pour fonctionner avec des longueurs de hash variables.

Il n'est pas possible de trouver les données originales à partir des empreintes : Les fonctions de hachage ne fonctionnent que dans un seul sens.

Dans ce mode de réalisation de l'invention, la fonction de hachage est une fonction SHA-256. Toutefois l'invention n'est pas limitée à une unique fonction de hachage, dont de nombreuses alternatives sont connues de l'homme du métier.

La transformation 131 d'une trace par la fonction de hachage donne une empreinte ou hash, appelée Blockhash. Autrement dit l'empreinte d'une trace dans le journal est appelée le Blockhash.

A partir du hash de chaque trace, on crée un journal 133, 133' de clés de sécurité.

Plus précisément dans ce mode de réalisation de l'invention, on crée deux journaux 133, 133' d'une part un journal 133' formant chaînage des Blockhash, et d'autre part un journal 133 de hash incrémental.

En effet, chaque empreinte, qui se présente dans ce mode de réalisation sous la forme d'une chaîne de 64 caractères, est associée 132, par calcul avec la fonction de hachage, à l'empreinte de la trace suivante dans le journal, créant un nouveau hash, et ainsi de suite, jusqu'à la dernière trace. On obtient en d'autres mots une empreinte calculée 132 de manière incrémentale avec les empreintes précédentes successivement calculées, appelée *current hash, ou aussi empreinte incrémentale.*

Ainsi, le journal de hash incrémental 133 comprend une succession d'empreintes, formée chacune de la combinaison d'une trace associée avec l'empreinte précédente du journal 133, autrement dit avec le hash incrémental précédent.

Toutefois bien que la création des deux journaux de clés 133, 133' soit préférée, l'invention peut aussi être mise en œuvre avec seulement la création de l'un des deux journaux 133, 133'.

Dans le cas de photos, l'empreinte de chaque photo du rapport d'état des lieux est également calculée à l'aide d'une fonction de hachage ici SHA-1, et se présente sous la forme d'une série de 40 caractères.

Les preuves des photos seules peuvent ainsi selon une mise en œuvre de l'invention être séparées des autres éléments tracés.

Par ailleurs les photos peuvent aussi être stockées dans un journal distinct.

Toutefois des métadonnées de la photo peuvent être ajoutées dans le journal principal afin de renforcer la capacité d'authentification des données du rapport.

La dernière empreinte incrémentale calculée, soit le dernier hash incrémental calculé, qui correspond à l'empreinte de la dernière trace acquise avant la fin d'édition du rapport calculée avec le hash incrémental précédent, correspond à la clé de sécurité finale.

L'empreinte finale du journal, aussi appelée clé de sécurité finale, est alors enregistrée 134 dans une Blockchain, dans ce mode de réalisation dans la Blockchain publique Bitcoin.

Ce processus permet d'obtenir une preuve irréfutable de l'existence des données contenues dans le journal et par ricochet, dans le rapport d'état des lieux généré.

Puis le procédé procède à une étape d'édition numérique 15 et/ou d'impression physique du rapport final.

Dans ce mode de réalisation de l'invention le rapport est édité dans un format de fichier encapsulé, ici du PDF, mais tout autre mode d'édition du rapport peut être mis en œuvre par l'homme du métier.

En particulier, le document édité est signé, via un cachet électronique apposé par le procédé 1, de sorte à attester de la création de ce fichier par ce procédé 1, par exemple avec un cachet basé sur un certificat numérique délivré par une autorité de certification agréée.

L'invention concerne aussi un procédé de vérification 3 de l'authenticité d'un document établi par ledit procédé de création 1 précédent.

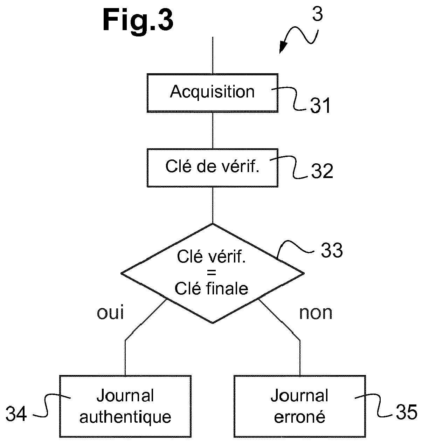

Le procédé 3, en référence à la figure 3, comprend une étape d'acquisition 31 des données stockées, d'une clé de sécurité associée et d'un journal de saisie, associés au rapport à vérifier.

Les éléments acquis sont ainsi acquis par le procédé sur une plateforme, par exemple un serveur distant et privé.

A partir des données acquises 31, on calcule 32 d'une seconde clé de sécurité, dite clé de vérification, avec le même procédé de hachage que pour la création de rapport, à partir des données du journal de saisie associé et desdites données stockées.

Une fois la clé de de vérification calculée, selon le même procédé de calcul que pour le procédé 1 de création, on la compare 33 à la clé de sécurité finale.

La clé de sécurité finale ayant put être acquise lors de l'étape d'acquisition 31 ou lors d'une autre d'étape d'acquisition, par exemple en l'acquérant sur une Blockchain, telle que la Blockchain publique de Bitcoin.

Si on constate lors de la comparaison 33 entre la clé de sécurité associée et la seconde clé de sécurité, que les deux clés sont identiques alors le document est authentique 34.

Par contre si les deux clés sont différentes, alors il est établi que le journal n'est pas conforme 35 au rapport associé.

Ainsi, les deux procédés 1 et 3 permettent de sécuriser la constitution et la vérification de rapports.

En particulier, le scellement des traces dans la Blockchain donne lieu à la génération d'un reçu d'ancrage ou reçu de preuve, qui est un fichier contenant l'ensemble des informations nécessaires pour vérifier l'existence des données (traces) contenues dans un journal, et leur horodatage. Le format de preuve utilisé dans ce mode de réalisation de l'invention est Chainpoint 1.0.

Un tel fichier atteste ainsi de l'enregistrement dans la Blockchain de la clé de sécurité finale ; l'enregistrement de la clé dans la Blockchain ayant pour objectif d'en garantir son intégrité.

Le reçu de preuve peut ainsi être communiqué en cas de contentieux ou de précontentieux, sur demande de toute personne intéressée par la vérification des données d'un journal. Le destinataire peut ainsi effectuer la vérification en deux temps :

Il pourra tout d'abord vérifier la réalité de l'ancrage de l'empreinte des données dans la Blockchain. Pour ce faire il utilisera le reçu de preuve et effectuera une recherche sur un site internet dédié ;

Dans un second temps, il recalculera l'empreinte des données à l'aide du procédé selon l'invention et comparera l'empreinte obtenue avec l'empreinte scellée dans la Blockchain.

## Revendications

1. Procédé (1) mis en œuvre par ordinateur d'établissement d'un document de transfert de responsabilité d'un bien **caractérisé en ce qu'**il comprend :
- L'acquisition (11) d'une pluralité de données saisies par un utilisateur, chaque donnée acquise correspondant à une information dudit document ; lesdites données étant saisies les unes après les autres par ledit utilisateur ;
- La création d'un journal de saisie (12) formant chaînage chronologique de la saisie des données par ledit utilisateur ;
- Une étape de calcul d'une clé de sécurité finale (13) fonction desdites données saisies par ledit utilisateur ;
- Une étape de stockage (14) desdites données acquises, dudit journal de saisie et de ladite clé de sécurité ; et
- Une étape d'édition (15) numérique d'un document de transfert de responsabilité en fonction desdites données acquises.

2. Procédé (1) selon la revendication 1 **caractérisé en ce que** le procédé comprend après l'étape de saisie, une étape de constitution (133') d'un premier journal de clé de sécurité, de sorte que pour chaque entrée du journal de saisie (12), le premier journal de clé de sécurité (133') comprend une clé calculée (131) en fonction de ladite entrée.

3. Procédé (1) selon la revendication 1 ou 2 **caractérisé en ce que** le procédé comprend en outre une étape de calcul de clé de sécurité incrémental (132) dans lequel on calcule une première clé (131) lors de l'acquisition d'une première donnée saisie par ledit utilisateur, et pour chaque acquisition d'une donnée suivante (130) saisie par l'utilisateur, on calcule une clé de sécurité suivante (131) en fonction de ladite donnée saisie et de la clé de sécurité précédente.

4. Procédé selon la revendication 3, **caractérisé en ce que** lesdites clés de sécurité calculées lors de l'étape de calcul de clé de sécurité incrémental (132) sont stockées de manière chaînées (133), de sorte à former un journal de clés de sécurité incrémental.

5. Procédé selon l'une quelconque des revendications 1 à 4, **caractérisé en ce qu'**au moins ladite clé de sécurité finale est stockée (134) de manière décentralisée, en particulier sur une Blockchain.

6. Procédé selon l'une quelconque des revendications 1 à 5, dans lequel l'étape d'acquisition comprend l'acquisition d'au moins un contenu multimédia, tel qu'une image numérique ou une vidéo numérique, associés chacun à une empreinte distincte calculée par un calcul d'empreinte distinct des autres données acquises et/ou stockée dans un journal d'empreintes de contenu multimédia distinct des autres données acquises.

7. Procédé (3) mis en œuvre par ordinateur de vérification de l'authenticité d'un document établi par ledit procédé selon l'une quelconque des revendications 1 à 6, **caractérisé en ce qu'**il comprend :
- L'acquisition (31) d'un ensemble de données stockées, d'une clé de sécurité associée et d'un journal de saisie associée ;
- Le calcul (32) d'une seconde clé de sécurité en fonction dudit journal de saisie associé et desdites données stockées ;
- La comparaison (33) entre la clé de sécurité associée et la seconde clé de sécurité, si les deux clés sont identiques ledit document étant authentique.

8. Dispositif de traitement de données comprenant des moyens pour mettre en œuvre les étapes du procédé d'établissement (1) selon l'une quelconque des revendications 1 à 6 et/ou les étapes du procédé de vérification (3) selon la revendication 7.

9. Programme d'ordinateur comprenant des instructions qui, lorsque le programme est exécuté par un ordinateur, conduisent celui-ci à mettre en œuvre les étapes du procédé d'établissement (1) selon l'une quelconque des revendications 1 à 6 et/ou les étapes du procédé de vérification (3) selon la revendication 7.

10. Support de données lisible par ordinateur, sur lequel est enregistré le programme d'ordinateur selon la revendication 8 et/ou le programme d'ordinateur selon la revendication 9.
